# EUROPEAN PATENT SPECIFICATION

(11) **EP 1 871 067 B1**
(45) Date of publication and mention of the grant of the patent: **01.09.2010**
(21) Application number: 06722020.2
(22) Date of filing: 09.03.2006
(51) Int. Cl.: H04L 29/06, H04L 12/56, H04L 12/66

(54) **A CALLING METHOD BETWEEN THE TERMINALS OF PACKET MULTIMEDIA COMMUNICATION SYSTEM**
VERFAHREN ZUM RUFEN ZWISCHEN ENDGERÄTEN IN EINEM MULTIMEDIA-KOMMUNIKATIONSSYSTEM AUF PACKED-BASIS
PROCEDE D'APPEL ENTRE LES TERMINAUX D'UN SYSTEME DE COMMUNICATION MULTIMEDIA PAR PAQUETS

(30) Priority: 22.04.2005 CN 200510034410
(43) Date of publication of application: 26.12.2007
(73) Proprietor: Huawei Technologies Co., Ltd., Longgang District, Shenzhen Guangdong 518129 (CN)
(72) Inventor: ZHANG, Hengliang, Shenzhen Guangdong 518219 (CN); WANG, Peng, Shenzhen Guangdong 518219 (CN); CHENG, Hua, Shenzhen Guangdong 518219 (CN); TAO, Ming, Shenzhen Guangdong 518219 (CN); WANG, Yang, Shenzhen Guangdong 518219 (CN); XU, Peili, Shenzhen Guangdong 518219 (CN)
(74) Representative: Kreuz, Georg Maria
(86) International application number: PCT/CN2006/000358
(87) International publication number: WO 2006/111062

(56) References cited:
- EP-A2- 1 309 149
- KR-A- 2004 072 254
- SINGH/SCHULZRINNE COLUMBIA UNIVERSITY: "Interworking Between SIP/SDP and H.323; draft-singh-sip-h323-01.txt" IETF STANDARD-WORKING-DRAFT, INTERNET ENGINEERING TASK FORCE, IETF, CH, no. 1, 16 May 2000 (2000-05-16), XP015035432 ISSN: 0000-0004
- HEMANT AGRAWAL TELVERSE COMMUNICATIONS RADHIKA R ROY AT&T VIPIN PALAWAT CISCO SYSTEMS INC ALAN JOHNSTON MCI WORLDCOM CHARLES AGBOH: "SIP-H.323 Interworking; draft-agrawal-sip-h323-interworking-01 .txt" STANDARD-WORKING-DRAFT, INTERNET ENGINEERING TASK FORCE, IETF, CH, no. 1, 13 July 2001 (2001-07-13), XP015009959 ISSN: 0000-0004
- LIU J. AND WANG F.: 'Implementation of interworking between SIP and VoIP network based on H.323 in softswitch' COMMUNICATION TECHNOLOGY no. 1, 2003,
- JIANG G., ZHAO Z., ZHENG S.: 'SDP in multimedia application' CHINA DATA COMMUNICATION no. 2, February 2004, pages 87 - 88, XP008071909

## Description

### Field of the Invention

The present invention relates to the communication field, and particularly to a method of calling between terminals applying different communication protocols in a packet-based multimedia communication system.

### Background of the Invention

As the Internet is developing rapidly, packet-based data services are becoming more and more important. Many conventional voice services will be substituted by or integrated into packet-based services, which is the development direction of a Next Generation Network (NGN). Voice over IP (Internet Protocol), for example, is to provide conventional voice services based upon packet-based transmission over the Internet.

In a conventional telephone system, certain signaling is required to cooperate from setting up a system connection till releasing the connection so as to complete a call. Similarly, in the Voice over IP (VoIP), a signaling system, i.e. a protocol, is also required as to how to discover a called party, how to make a reply, and how to transmit data in accordance with data processing capabilities of both parties. Presently in the world, influential protocols for the VoIP include the packet-based multimedia communication system (H. 323) protocol put forth by the Internet Telecommunication Union - Telecommunication Standardization Sector (ITU-T) and the Session Initial Protocol (SIP) put forth by the Internet Engineering Task Force (IETF).

In order to deploy a multimedia conference over a packet switching network that does not guarante Quality of Service (QoS), the 15th study group of the ITU presented the H. 323 Ver.1 in 1996 and the H. 323 Ver.2 in 1998. The H. 323 constitutes a standard for a multimedia communication system over non-QoS guaranteed Packet-Based Networks (PBN), which dominate today's desktop network systems, including the Ethernet based upon TCP/IP and IPX packet switching, the fast Ethernet, the token network, and the FDDI technique. Therefore, the H.323 standard provides a technical basis and guarantee for multimedia communication applications over internets such as a LAN, a WAN, etc.

The H.323 provides a multimedia communication standard for existing PBN (e.g., an IP network). Once combined with other IP techniques, such as the Resource Reservation Protocol (RSVP) of the IETF, the H. 323 would be able to implement a multimedia communication over the IP network. The IP-based LAN is becoming increasingly powerful and its bandwidth is increasing continuously. Since the H. 323 provides interoperation capabilities between devices, between applications, and between providers, it will guarantee a interoperabilities between all H. 323-compatible devices.

As a whole, the H. 323 is a framework construction which relates to contents of terminal devices, video/audio/data transmission, communication controls, network interface, as well as devices such as multipoint control units, multipoint controllers, multipoint processors, gateways, gate keepers and the like, which form a multipoint conference. Its fundamental component element is a "domain", one domain comprising at least one terminal and necessarily possessing only one gate keeper. In a H. system, various logical component parts are referred to as H. 323 entities, including the terminals, the gateways, etc, wherein the terminals, the gateways, and the multipoint control units are terminal devices in the H. 323 system and logical units in the network. The terminal devices can make a call or be called, while some entities, such as the gate keepers, can not be called. The H. 323 involves an end-to-end connection method between the H. 323 terminals and other terminals over different networks.

The SIP is an application control (signaling) protocol put forth by the IETF, for initiating a session. It can be used to create, modify and terminate a multimedia session process in which multiple participants participate. Members who participate in the session can communicate with each other in a way of multicasting, monocasting networking, or a combination of both. There are a client and a server in the SIP. The client refers to an application program that establishes a connection with the server in order to send a request to the server. The client is included in a user agent and a proxy. The server is an application program that provides a service and returns a reply to the request from the client.

For the SIP, there are four kinds of basic servers: a user agent server which communicates with a user upon receipt of an SIP request and returns a response on behalf of the user ; a proxy server which initiates a request on behalf of other clients, and serves as both a server and an intermediary program for the clients, and can modify contents in an original request message prior to forwarding the request; a redirect server which receives an SIP request and maps an original address in the request to none or multiple new addresses, and returns the new addresses to a client; and a registration server which receives a registration request from a client and accomplishes a registration of a user address. A user terminal program is usually required to include the user agent client and the user agent server. It can be seen that the proxy server, the redirecting server and the registration server are public network servers.

In terms of the SIP design, its extendable adaptability to other protocols has been taken into sufficient consideration. The SIP supports various address descriptions and addressing, including descriptions such as a user name@host address, a called number@PSTN (Public Switching Telecommunication Networks) gateway address, a common telephone number, etc. Thus, a SIP calling party can identify the location of a called party in a conventional telephone network according to a called address, and then initiates and establishes a call through a gateway connected to the conventional telephone network. The most powerful feature of the SIP is a function of locating a user. The SIP itself has a function of registering with the registration server, and the function of locating can be enhanced by means of location services provided by other location servers.

The SIP defines six kinds of signaling: INVITE, ACK, CANCEL, OPTIONS, BYE, and REGISTER, wherein INVITE and ACK are used to establish a call and accomplish handshaking three times, or to modify a session attribute after the establishment; BYE is used to terminate a session; OPTIONS is used to query for the capability of a server; CANCEL is used to cancel a request that has been issued but not yet ended ultimately; REGISTER is used for a client to register information such as user location or the like with the registration server.

The H.323 protocol was presented earlier and its major idea of design was based upon a conventional telephone mode, while the SIP protocol was presented later and uses the idea of design from the Internet Protocol for reference. At present, the H. 323 protocol is widely used in the VoIP. However, it is certain in the long term that the H.323 will be substituted by the SIP. Therefore, the intercommunication between the two major protocols of H.323 and SIP becomes important in the current transition period. Although they are from two different organizations and are different in the idea of design, they are almost identical in content, i.e. foucsing on various signaling of telephones, only different in the ways they are implemented. At present, the intercommunication between the H.323 and the SIP can be implemented through the technique of soft switch. Nevertheless, some problems have to be solved in practical applications, because the two major protocols differ from each other in many aspects.

A H.323 terminal can be classified as two kinds, i.e., a normal-start terminal and a fast-start terminal, depending on different startup process thereof. Upon initiation of a connection, the normal-start terminal does not carry media information which is obtained through subsequent negotiation, while the fast-start terminal carries the media information, and thus the startup thereof is faster. Since the H.323 fast-start terminal carries the media information upon initiation of a connection, the H.323 terminal can be called through a SIP relay. A PBN in which an H.323 call is made through a SIP relay includes two soft switches, a calling H.323 terminal and a called H.323 terminal. Here, the calling H.323 terminal initiates a call, through the H.323, to the soft switch at the calling side, which in turn converts the call into an SIP call to the soft switch at the called side, which then converts the call back into H. 323 signaling, until the H. 323 terminal is called.

Due to limitations of the protocol, the normal-start H.323 terminal can not call a H.323 terminal through the SIP relay. The reason is that when the H. 323 normal-start terminal initiates a call, media information can not be provided during the startup, and therefore Session Description Protocol (abbreviated as "SDP") information can not be created in an SIP session such that the SIP relay can not continue. Particularly, when the normal-start H.323 terminal initiates a call, the Q.931 call signaling SETUP, which is sent by the normal-start H.323 terminal to the soft switch, carries no Open Logic Channel information representative of the media information. The soft switch at the calling side maps the message to an INVITE message of the SIP which is sent to the soft switch at the called side. Since no Open Logical Channel information is received from the normal-start H.323 terminal, the INVITE message sent to the soft switch at the called side by the soft switch at the calling side carries no SDP information. Upon receipt of the INVITE message sent from the soft switch at the calling side, the soft switch at the called side maps the message into a SETUP message of the H.323 which is sent to the called H.323 terminal. Likewise, this SETUP message carries no Open Logical Channel information either. After the called H.323 terminal receives the SETUP message, no Open Logical Channel information can be carried in a subsequent CONNECT message that is sent to the soft switch at the called side, due to the absence of the Open Logical Channel information. Upon receipt of the CONNECT message from the called H.323 terminal, the soft switch at the called side shall map the message to a 200 OK message of the SIP which is sent to the soft switch at the calling side. However, due to the absence of the Open Logical Channel information in the CONNECT message, the mapped 200 OK message of the SIP contains no SDP information, which does not comply with the SIP specifications. Thus, the call has to be released by the soft switchs, with the entire call being unsucessful.

IETF Standard "Interworking Between SIP/SDP and H.323; drafting-singh-sip-h323-01.txt" describes the interworking between SIP and H.323, including the translation between H.245 and SDP. In the document, the general requirements for such a translation and a solution which meets those requirements are listed. The call setup via message flows and pseudo code are also described.

Another IETF Standard "SIP-H.323 Intertvorking; draft-agrawal-sip-h323-iterwording-01.txt" also describes the interworking between SIP and H.323. It defines the logical entity known as the SCP-H.323 Interworking function (SIP-H.323 IWF) that will allow the interworking between the SIP and H.323 protocol.

### Summary of the Invention

[1] In view of the forgoing, an embodiment of the present invention provides a method of calling between terminals in packet-based multimedia communication system according to claim 1, by which a normal-start H.323 terminal can call a H. 323 terminal through SIP relay.

[2] An embodiment of the present invention provides a method of calling between terminals in a packet-based multimedia communication system, wherein when a calling H.323 terminal is a normal-start terminal, the method includes the steps of:

[3] A) the calling H.323 terminal and a called H.323 terminal initiating a call and sending back a response respectively, during which a conversion between H.323 signaling and Session Initiation Protocol (SIP) signaling is performed through a soft switch at a calling side and a soft switch at a called side;

[4] B) the soft switch at the called side constructing Session Description Protocol (SDP) information, and forming and sending a SIP message to the soft switch at the calling side, wherein the soft switch at the called side constructing SDP information comprises: the soft switch at the called side creating virtual SDP information which includes information of coding/decoding capabilities of the called H.323 terminal, a call signaling address and a call signaling port number of the soft switch at the called side ; or the soft switch at the called side creating the SDP information comprising H.245 address information of the called H.323 terminal, seting a flag for identifying the SDP information comprises the H.245 address information, wherein the H.245 address information comprised in a message from the called H.323 terminal; and

[5] C) the calling H.323 terninal and the called H.323 terminal obtaining information of each other respectively, and establishing communication with each other.

Preferably, the step of constructing the SDP information in step B) may be performed based upon information related to an H. 245 connection established by the called H. 323 terminal.

Preferably, step C) may further include the steps of:

C1) the soft switch at the calling side obtaining and sending the information of the calling H. 323 terminal to the soft switch at the called side;

C2) the soft switch at the called side obtaining and sending the information of the called H. 323 terminal to the soft switch at the calling side; and

C3) the calling H. 323 terminal obtaining real media information of the called H. 323 terminal through a meida redirection so as to establish a normal call.

Preferably, the step of constructing the SDP information in the step B) is performed based upon information related to a H. 245 connection established by the called H. 323 terminal;

step C1) may include the steps of: the soft switch at the calling side establishing the H. 245 connection with the calling H. 323 terminal, and obtaining the information of the calling H. 323 terminal through an interaction of H. 245 signaling;

step C2) may include the steps of: the soft switch at the called side continuing the interaction of H. 245 signaling with the called H. 323 terminal, and obtaining and sending the information of the called H. 323 terminal to the soft switch at the calling side; and

step C3) may include the steps of: the soft switch at the calling side performing a media redirection process with the callig H.323 terminal which obtains the information of the called H. 323 terminall; and the calling H.323 terminal and the called H.323 terminal establishing a normal communication.

Preferably, the set flag may be voice coding/deeding information in the SDP information

Preferably, the step C) may include the steps of:

the soft switch at the calling side obtaining the H. 245 address information of the called H. 323 terminal in accordance with the flag, and sending a message to notify the calling H. 323 terminal;

the calling H. 323 terminal and the called H. 323 terminal establishing an H. 245 connection and negotiating a media communication.

Preferably, the method may further include the steps of: in case the negotiation is unsucessful, the calling H. 323 terminal sending a RELEASE message to the soft switch at the called side to release the SIP connection between the soft switch at the calling side and the soft switch at the called side.

The main difference between the technical solutions of the present invention and those of the prior art lies in that, during an SIP relay process, according to the embodiements, a soft switch at a called side constructs SDP information, and forms and sends an SIP message to a soft switch at a calling side, enabling the SIP relay to continue. Thus, calling and called terminals can obtain a knowledge of each other during a subsequent process, and establish a normal call, so that the problem of calling from an H. 323 normal-start terminal to an H. 323 terminal is solved, the applications of the H. 323 in various networks are generalized, the qualities and performances of network services are improved, and particulary, an integral solution for the NGN is optimized.

In a preferred embodiment of the present invention, virtual SDP information is constructed and added in an SIP 200 OK message so that the SIP relay may be continued. An H.245 interaction process is divided so that information such as capabilities, an address, a port number and the like of an H. 323 terminal may be obtained. Both parties may have the knowledge of each other through a media redirection, and a normal call can thus be established. Alternatively, the specific SDP information for carrying H.245 address information of the called H. 323 terminal is identified by specific coding/decoding information, and sent to the calling H. 323 terminal through the SIP relay. Both of the parties can establish a media communication through a negotiation. Obvious and beneficial effects may result from the present invention, that is, due to the implemention of a SDP information construction and an SIP relay call, the problem of calling from a H. 323 normal-start terminal to an H. 323 terminal is solved, the applications of the H. 323 in various networks are generalized, the qualities and performances of network services are improved, and particulary, an integral solution for the NGN is optimized.

### Brief Descriptions of the Drawings

Fig. 1 is a flow diagram of a method of calling between H. 323 terminals through an SIP relay by constructing virtual SDP information according to an embodiment of the present invention; and

Fig. 2 is a flow diagram of a method of calling between H. 323 terminals through an SIP relay by constructing special SDP information according to another embodiment of the present invention.

### Detailed Descriptions of the Embodiments

Hereafter, the technical solutions and advantages of the present invention will become more apparent by describing in further details the embodiments of the present invention with reference to the drawings.

In general, the principle of the present invention lies in that, virtual SDP information may be constructed and added in an SIP 200 OK message which is sent back to a soft switch at a calling side from a soft switch at a called side, so that an SIP signaling interaction is able to be performed normally. In addition, a communication process of the H. 245, i.e., the control protocol of H.323, may be divided into multiple sub-processes that are used respectively to obtain information of a calling terminal at the soft switch at the calling side and to obtain information of a called terminal at the soft switch at the called side. In the end, the calling terminal can obtain real media information of the called tenninal through a media redirection, and thereby a normal call is established.

Alternatively, special SDP information can be constructed, and information such as H.245 address information or the like, which is sent back from the called terminal, may be added to the special SDP information at the soft switch at the called side, and a flag may be set to notify the soft switch at the calling side that the SDP information has transfered the H.245 address information. The calling terminal and the called terminal negotiate with each other in accordance with the H.245 address and communicate with each other in accordance with the result of the negotiation. The SIP communication will be canceled if the negotiation fails.

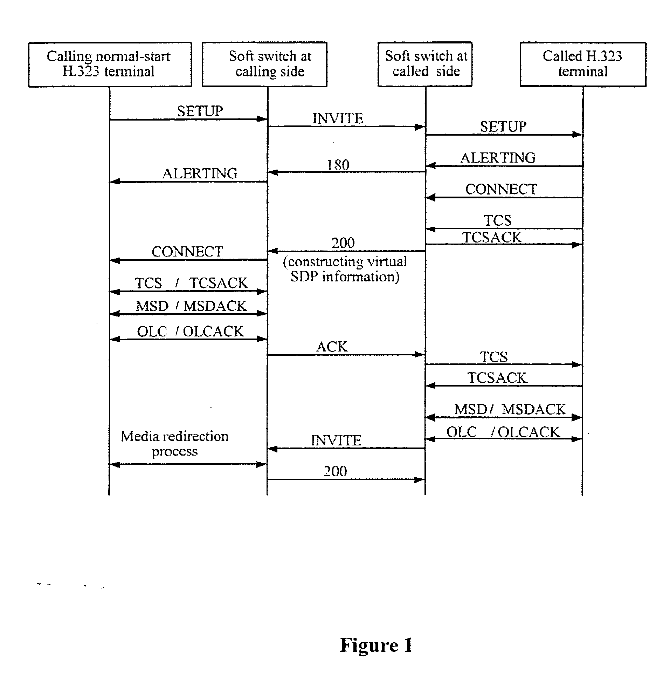

Fig. 1 shows the flow diagram of a method of calling from a normal-start H.323 terminal to an H.323 terminal through an SIP relay by the construction of virtual SDP information, the division of an H.245 control process and a media redirection according to an embodiment of the present invention.

According to the H.323 standard, upon initiation of a call to an H.323 terminal, a calling H.323 normal-start terminal sends a SETUP message to a soft switch at a calling side first. Upon the receipt of the SETUP message, the soft switch at the calling side convertes it into a SIP INVITE message which is sent to a soft switch at a called side. Upon the receipt of the INVITE message, the soft switch at the called side converts it into an H.323 SETUP message which is sent to a destined called H.323 terminal. Thus, an H.323 call is called successfully from the calling H.323 terminal to the called H.323 terminal through the translation and the forwarding at the soft switches at the calling and the called sides. At this time, through the same path, an ALERTING from the called H.323 terminal is translated into an SIP 180 message by the soft switch at the called side, and the SIP 180 message is forwarded to the soft switch at the calling side, until the ALERTING is sent back to the calling H.323 normal-start terminal.

Next, upon receipt of a CONNECT message from the called H.323 terminal, the soft switch at the called side establishes an H.245 connection with the called H.323 terminal. The called H.323 terminal sends a Terminal Capability Set (TCS) message. Upon receipt of the TCS message, the soft switch at the called side will return a TCS Acknowledgement (TCSACK) message to the called H.323 terminal according to the protocol.

Also, the soft switch at the called side creates virtual SDP information, which includes real capabilities of the called H.323 terminal as well as a call signaling address and a port number of the soft switch at the called side. Based upon the virtual SDP information, the soft switch at the called side can send an SIP 200 message inwhich the virtual SDP information is included to the soft switch at the calling side according to the SIP protocol. Thus, the message conforms to the SIP protocol standard, and will not be cancelled.

After that, upon receipt of the SIP 200 message from the called side, the soft switch at the calling side sends a CONNECT message to the calling H.323 terminal. In the CONNECT message, an H.245 Address field is filled with the address of the soft switch at the calling side, and the calling H.323 terminal receives the CONNECT message and thereby establishes an H.245 connection with the soft switch at the calling side. Through the H.245 connection, the soft switch at the calling side, using the virtual media information, exchanges H.245 messages with the calling H.323 terminal, and then obtains real media information including the capabilities, the logical channel address, the port number and the like of the calling H.323 terminal. Here, the H.245 interaction process includes signaling interaction processes such as TCS/TCSACK, Master Slave Determination (MSD)/MSDACK, Open Logical Channel (OLC)/OLCACK, etc.

The soft switch at the calling side sends the real media information of the calling H.323 terminal, through a ACK message, to the soft switch at the called side, which in turn continues to finish the interaction process of H.245 messages, including signaling interaction procedures such as TCS/TCSACK, MSD/MSDACK, OLC/OLCACK and the like, with the called H.323 terminal. Thus, the called H.323 terminal obtains the real media information of the calling H.323 terminal.

Also, through the interaction process of H.245 messages between the soft switch at the called side and the called H.323 terminal, the soft switch at the called side also obtains the real media information of the called H.323 terminal, and in turn sends it to the soft switch at the calling side through an INVITE message.

In the end, the soft switch at the calling side performs a media redirection process with the calling H.323 terminal which obtains the real media information of the called H.323 terminal through the media redirection. Thus, the calling and the called H.323 terminals has the knowledge of the real media information of each other, and a normal call can thereby be established.

In another embodiment of the present invention, the calling and the called H.323 terminals can negotiate directly according to H.245 address information of the terminals and perform a further communication according to the result of the negotiation, by means of constructing special SDP information to carry the H.245 address information and transferring it between each other through a SIP 200 OK message.

In fact, a major reason for a call failure lies in that, the soft switch at the called side, upon sending the SIP 200 OK message, does not obtain logical channel information of the called H.323 terminal, and thus it is impossible to construct the SDP information. To solve the problem, it is critical as to how to construct the SDP information to enable the SIP 200 OK message to be sent back successfully to the soft switch at the calling side. It can be seen from an analysis of the H.323 protocol that the CONNECT message sent by the called H.323 terminal includes no logical channel information, but includes H.245 connection address information of the terminal, including an IP address and a port number and the like. Therefore, in another embodiment of the present invention, the SIP interaction is continued by constructing the special SDP information to carry the H.245 address information.

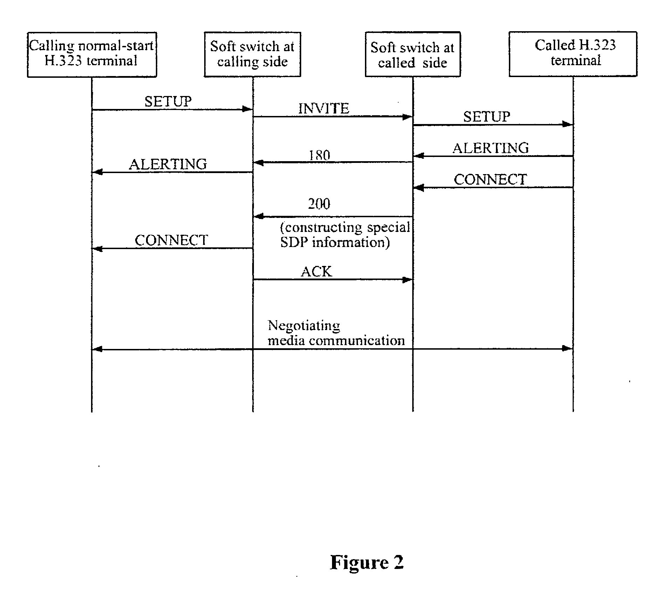

Fig. 2 shows a flow diagram of a method of calling between H.323 terminals through an SIP relay by constructing special SDP information according to another embodiment of the present invention.

According to the H.323 standard, upon initiation of a call to an H.323 terminal, a calling H. 323 normal-start terminal sends a SETUP message to a soft switch at a calling side first. Upon the receipt of the SETUP message, the soft switch at the calling side convertes it into an SIP INVITE message which is sent to a soft switch at a called side. Upon the receipt of the INVITE message, the soft switch at the called side converts it into an H.323 SETUP message which is sent to a destined called H.323 terminal. Thus, an H.323 call is called successfully from the calling H. 323 terminal to the called H. 323 terminal through the translation and the forwarding at the soft switches at the calling and the called sides. At this time, through the same path, an ALERTING from the called H. 323 terminal is translated into an SIP 180 message by the soft switch at the called side, and the SIP 180 message is forwarded to the soft switch at the calling side, until the ALERTING is sent back to the calling H.323 normal-start terminal.

Next, upon the receipt of a CONNECT message from the called H.323 terminal, the soft switch at the called side obtains H.245 address information of the called H.323 terminal according to the CONNECT message, stores the H.245 address information in SDP information, and sets a flag indicating that the SDP information bears the H.245 address information. In a preferred embodiment of the present invention, voice coding/decoding information in the SDP information is used as the flag. For instance, a specific internal value, which has been negotiated between the soft switches at the calling and the called sides, may be filled to identify that information in the SDP information is used to store the H.245 address information of the called H.323 terminal. Information such as an address, a port number or the like in the SDP information may be filled with the H.245 address information, and other information in the SDP information may be a default value. With such SDP information, the soft switch at the called side can send an SIP 200 message, which includes the identified SDP information, to the soft switch at the calling side according to the SIP protocol. Therefore, the message complies with the SIP protocol stardard and will not be canceled.

Accordingly, upon the receipt of the 200 OK message from the soft switch at the called side, the soft switch at the calling side can know, in accordance with the voice coding/decoding value in the SDP information, that SDP contents in the message are not general SDP contents but contains the H.245 address information of the called H.323 terminal, and thus can extract the H.245 address information of the called H.323 terminal from the SDP information. Then, the soft switch at the calling side can send the H.245 address information to the calling H.323 terminal through a CONNECT message. Also, the soft switch at the calling side is required to send an SIP ACK message to the soft switch at the called side.

Upon the receipt of the CONNECT message containing the H.245 address information of the called H.323 terminal, the calling H.323 terminal starts the H.245 negotiation. The calling and the called H.323 terminals finally perform a voice/video communication using the result of the negotiation. Also, the soft switch at the calling side sends the SDP information in the received 200 OK message to the soft switch at the called side through an ACK message, and thus the soft switch at the called side can know, from the voice coding/decoding value in the SDP, that the SDP is different from a general SDP.

If the negotiation between the calling and the called H.323 terminals is not successful in the end, the calling H.323 terminal sends a RELEASE message to the soft switch at the calling side, which in turn sends an SIP Bye message to the soft switch at the called side, releasing the called side and the SIP connection.

While the present invention has been illustrated and described with reference to some presently-preferred embodiments of the present invention, those skilled in the art shall appreciate that various changes, variations, modifications, alterations, substitutions or the like in any aspect can be made without departing from the scope of the present invention as defined by the accompanying claims.

## Claims

1. A method of calling between terminals in a packet-based multimedia communication system, wherein, when a calling H.323 terminal is a normal-start terminal, the method comprises the steps of:
A. the calling H.323 terminal and a called H.323 terminal initiating a call and sending back a response respectively, during which a conversion between H.323 signaling and Session Initiation Protocol, SIP, signaling is performed through a soft switch at a calling side and a soft switch at a called side;
B. the soft switch at the called side constructing Session Description Protocol, SDP, information, and forming and sending an SIP message to the soft switch at the calling side; wherein the soft switch at the called side constructing SDP information comprises: the soft switch at the called side creating virtual SDP information which includes information of coding/decoding capabilities of the called H.323 terminal, a call signaling address and a call signaling port number of the soft switch at the called side ; or the soft switch at the called side creating the SDP information comprising H.245 address information of the called H.323 terminal, setting a flag for identifying the SDP information comprises the H.245 address information, wherein the H.245 address information comprised in a message from the called H.323 terminal; and
C. the calling H.323 terminal and the called H.323 terminal obtaining information of each other respectively, and establishing a communication with each other.

2. The method according to claim 1, wherein the the creating virtual SDP information in step B is performed based upon information related to an H.245 connection established by the called H.323 terminal.

3. The method according to claim 1, when the soft switch at the called side creating virtual SDP information wherein step C comprises the steps of:
C1. the soft switch at the calling side obtaining and sending the information of the calling H. 323 terminal to the soft switch at the called side;
C2. the soft switch at the called side obtaining and sending the information of the called H. 323 terminal to the soft switch at the calling side; and
C3. the calling H.323 terminal obtaining real media information of the called H.323 terminal through a meida redirection so as to establish a normal call.

4. The method according to claim 3, wherein
the step of constructing the SDP information in step B is performed based upon information related to an H.245 connection established by the called H.323 terminal;
step C1 comprises the steps of: the logic function entity at the calling side establishing an H.245 connection with the calling H.323 terminal, and obtaining the information of the calling H.323 terminal through an interaction of H.245 signaling;
step C2 comprises the steps of: the logic function entity at the called side continuing to perform an interaction of H.245 signaling with the called H.323 terminal, and obtaining and sending the information of the called H.323 terminal to the logic function entity at the calling side; and
step C3 comprises the steps of: the logic function entity at the calling side performing a media redirection process with the calling H.323 terminal which obtains the information of the called H. 323 terminall; and the calling H.323 terminal and the called H.323 terminal establishing a communication.

5. The method according to claim 1, wherein the set flag is voice coding/decoding information in the SDP information.

6. The method according to claim 1, when the soft switch at the called side creating the SDP information comprising H.245 address information of the called H.323 terminal wherein step C further comprises the steps of:
the soft switch at the calling side obtaining the H.245 address information of the called H.323 terminal in accordance with the set flag, and sending a message to notify the calling H.323 terminal; and
the calling H.323 terminal and the called H.323 terminal establishing an H.245 connection and negotiating a media communication.

7. The method according to claim 6, wherein the method further comprises the steps of: in case the negotiation is unsucessful, the calling H.323 terminal sending a RELEASE message to the soft switch at the called side to release the SIP connection between the soft switch at the calling side and the soft switch at the called side.

## Patentansprüche

1. Verfahren zum Rufen zwischen Endgeräten in einem auf Paketen basierenden Multimedia-Kommunikationssystem, wobei, wenn ein rufendes H.323-Endgerät ein Normalstart-Endgerät ist, das Verfahren die folgenden Schritte umfasst:
A. das rufende H.323-Endgerät und ein gerufenes H.323-Endgerät leiten einen Ruf ein bzw. senden eine Antwort zurück, wobei dabei eine Umsetzung zwischen H.323-Signalisierung und Signalisierung des Session Initiation Protocol SIP durch einen Soft-Switch auf einer rufenden Seite und einen Soft-Switch auf einer gerufenen Seite durchgeführt wird;
B. der Soft-Switch auf der gerufenen Seite konstruiert Informationen des Session Description Protocol SDP und bildet und sendet eine SIP-Nachricht zu dem Soft-Switch auf der rufenden Seite; wobei das Konstruieren von SDP-Informationen durch den Soft-Switch auf der gerufenen Seite Folgendes umfasst: der Soft-Switch auf der gerufenen Seite erzeugt virtuelle SDP-Informationen, die Informationen der Codierungs-/Decodierungsfähigkeiten des gerufenen H.323-Endgeräts, eine Rufsignalisierungsadresse und eine Rufsignalisierungsportnummer des Soft-Switch auf der gerufenen Seite umfassen; oder der Soft-Switch auf der gerufenen Seite erzeugt die SDP-Informationen, die H.245-Adresseninformationen des gerufenen H.323-Endgeräts umfassen, setzt ein Flag zum Identifizieren, dass die SDP-Informationen die H.245-Adresseninformationen umfassen, wobei die H.245-Adresseninformationen in einer Nachricht von dem gerufenen H.323-Endgerät umfasst werden; und
C. das rufende H.323-Endgerät und das gerufene H.323-Endgerät erhalten Informationen jeweils voneinander und stellen eine Kommunikation miteinander her.

2. Verfahren nach Anspruch 1, wobei das Erzeugen von virtuellen SDP-Informationen in Schritt B auf der Basis von Informationen in Bezug auf eine durch das gerufene H.323-Endgerät hergestellte H.245-Verbindung durchgeführt wird.

3. Verfahren nach Anspruch 1, wobei der Soft-Switch auf der gerufenen Seite virtuelle SDP-Informationen erzeugt, wobei Schritt C die folgenden Schritte umfasst:
C1. der Soft-Switch auf der rufenden Seite erhält und sendet die Informationen des rufenden H.323-Endgeräts zu dem Soft-Switch auf der gerufenen Seite;
C2. der Soft-Switch auf der gerufenen Seite erhält und sendet die Informationen des gerufenen H.323-Endgeräts zu dem Soft-Switch auf der rufenden Seite; und
C3. das rufende H.323-Endgerät erhält reale Medieninformationen des gerufenen H.323-Endgeräts durch eine Medien-Umlenkung, um so einen normalen Ruf herzustellen.

4. Verfahren nach Anspruch 3, wobei
der Schritt des Konstruierens der SDP-Informationen in Schritt B auf der Basis von Informationen in Bezug auf eine durch das gerufene H.323-Endgerät hergestellte H.245-Verbindung durchgeführt wird;
Schritt C1 die folgenden Schritte umfasst: die logische Funktionsentität auf der rufenden Seite stellt eine H.245-Verbindung mit dem rufenden H.323-Endgerät her und erhält die Informationen des rufenden H.323-Endgeräts durch eine Wechselwirkung von H.245-Signalisierung;
Schritt C2 die folgenden Schritte umfasst: die logische Funktionsentität auf der gerufenen Seite führt eine Wechselwirkung von H.245-Signalisierung mit dem gerufenen H.323-Endgerät weiter durch und erhält und sendet die Informationen des gerufenen H.323-Endgeräts zu der logischen Funktionsentität auf der rufenden Seite; und
Schritt C3 die folgenden Schritte umfasst: die logische Funktionsentität auf der rufenden Seite führt einen Medien-Umlenkungsprozess mit dem rufenden H.323-Endgerät durch, das die Informationen des gerufenen H.323-Endgeräts erhält; und das rufende H.323-Endgerät und das gerufene H.323-Endgerät stellen eine Kommunikation her.

5. Verfahren nach Anspruch 1, wobei es sich bei dem gesetzten Flag um Sprachcodierungs-/-decodierungsinformationen in den SDP-Informationen handelt.

6. Verfahren nach Anspruch 1, wobei, wenn der Soft-Switch auf der gerufenen Seite die SDP-Informationen, die H.245-Adresseninformationen des gerufenen H.323-Endgeräts umfassen, erzeugt, Schritt C ferner die folgenden Schritte umfasst:
der Soft-Switch auf der rufenden Seite erhält die H.245-Adresseninformationen des gerufenen H.323-Endgeräts gemäß dem gesetzten Flag und sendet eine Nachricht zum Benachrichtigen des rufenden H.323-Endgeräts; und
das rufende H.323-Endgerät und das gerufene H.323-Endgerät stellen eine H.245-Verbindung her und handeln eine Medienkommunikation aus.

7. Verfahren nach Anspruch 6, wobei das Verfahren ferner die folgenden Schritte umfasst: falls die Aushandlung erfolglos bleibt, sendet das rufende H.323-Endgerät eine RELEASE-Nachricht zu dem Soft-Switch auf der gerufenen Seite, um die SIP-Verbindung zwischen dem Soft-Switch auf der rufenden Seite und dem Soft-Switch auf der gerufenen Seite freizugeben.

## Revendications

1. Procédé d'appel entre les terminaux d'un système de communication multimédia par paquets, dans lequel quand un terminal H.323 appelant est un terminal à démarrage normal, le procédé comprend les étapes suivantes :
A. lancement d'un appel et renvoi d'une réponse par le terminal H.323 appelant et un terminal H.323 appelé respectivement, durant lesquels une conversion entre la signalisation H.323 et la signalisation de Protocole de Lancement de Session, SIP, est effectuée par le biais d'un commutateur logique côté appelant et d'un commutateur logique côté appelé ;
B. construction par le commutateur logique côté appelé d'informations de Protocole de Description de Session, SDP, et formation et envoi par celui-ci d'un message SIP au commutateur logique côté appelant ; la construction par le commutateur logique côté appelé d'informations SDP comprenant : la création par le commutateur logique côté appelé d'informations SDP virtuelles qui comportent des informations de capabilités de codage/décodage du terminal H.323 appelé, une adresse de signalisation d'appel et un numéro de port de signalisation d'appel du commutateur logique côté appelé ; ou la création par le commutateur logique côté appelé d'informations SDP comprenant des informations d'adresse H.245 du terminal H.323 appelé, l'établissement par celui-ci d'un fanion pour identifier les informations SDP comprenant les informations d'adresse H.245, les informations d'adresse H.245 étant comprises dans un message provenant du terminal H.323 appelé ; et
C. obtention par le terminal H.323 appelant et le terminal H.323 appelé d'informations mutuelles, et l'établissement par ceux-ci d'une communication entre eux.

2. Procédé selon la revendication 1, dans lequel la création d'informations SDP virtuelles à l'étape B est exécutée en fonction d'informations concernant une connexion H.245 établie par le terminal H.323 appelé.

3. Procédé selon la revendication 1, durant la création par le commutateur logique côté appelé d'informations SDP virtuelles, l'étape C comprenant les étapes suivantes :
C1. obtention et envoi par le commutateur logique côté appelant des informations du terminal H.323 appelant au commutateur logique côté appelé ;
C2. obtention et envoi par le commutateur logique côté appelé des informations du terminal H.323 appelé au commutateur logique côté appelant ; et
C3. obtention par le terminal H.323 appelant d'informations de média réelles du terminal H.323 appelé par un réacheminement de média de façon à établir un appel normal.

4. Procédé selon la revendication 3, dans lequel
l'étape de construction des informations SDP à l'étape B est exécutée en fonction d'informations concernant une connexion H.245 établie par le terminal H.323 appelé; l'étape C1 comprend les étapes suivantes : établissement par l'entité de fonction logique côté appelant d'une connexion H.245 avec le terminal H.323 appelant, et obtention des informations du terminal H.323 appelant par le biais d'une interaction de signalisation H.245 ;
l'étape C2 comprend les étapes suivantes : continuation de l'exécution par l'entité de fonction logique côté appelé d'une interaction de signalisation H.245 avec le terminal H.323 appelé, et obtention et envoi des informations du terminal H.323 appelé à l'entité de fonction logique côté appelant ; et
l'étape C3 comprend les étapes suivantes : exécution par l'entité de fonction logique côté appelant d'un processus de réacheminement de média avec le terminal H.323 appelant qui obtient les informations du terminal H.323 appelé ; et établissement par le terminal H.323 appelant et le terminal H.323 appelé d'une communication.

5. Procédé selon la revendication 1, dans lequel le fanion établi est une information de codage/décodage vocal dans les informations SDP.

6. Procédé selon la revendication 1, durant la création par le commutateur logique côté appelé d'informations SDP comprenant des informations d'adresse H.245 du terminal H.323 appelé, l'étape C comprenant en outre les étapes suivantes :
obtention par le commutateur logique côté appelant des informations d'adresse H.245 du terminal H.323 appelé en fonction du fanion établi, et envoi d'un message pour notifier le terminal H.323 appelant ; et
établissement par le terminal H.323 appelant et le terminal H.323 appelé d'une connexion H.245 et négociation par ceux-ci d'une communication média.

7. Procédé selon la revendication 6, dans lequel le procédé comprend en outre les étapes suivantes : en cas d'échec de la négociation, envoi par le terminal H.323 appelant d'un message LIBERATION au commutateur logique côté appelé afin de libérer la connexion SIP entre le commutateur logique côté appelant et le commutateur logique côté appelé.
